# EUROPÄISCHE PATENTSCHRIFT

(11) **EP 1 275 950 B1**
(45) Veröffentlichungstag und Bekanntmachung des Hinweises auf die Patenterteilung: **12.09.2007**
(21) Anmeldenummer: 02015428.2
(22) Anmeldetag: 11.07.2002
(51) Int. Cl.: G01L 19/14

(54) **Relativdruckmessgerät**
Relative pressure measuring device
Dispositif de mesure d'une pression relative

(30) Priorität: 14.07.2001 DE 10134359
(43) Veröffentlichungstag der Anmeldung: 15.01.2003
(73) Patentinhaber: Endress + Hauser GmbH + Co. KG, 79689 Maulburg (DE)
(72) Erfinder: Burczyk, Dietfried, 14513 Teltow (DE); Stöcklin, Tanja, 79539 Lörrach (DE); Velten, Thomas, Dr., 66507 Reifenberg (DE)
(74) Vertreter: Andres, Angelika Maria

(56) Entgegenhaltungen:
- EP-A- 1 070 948
- US-A- 6 051 853

## Beschreibung

Die Erfindung betrifft ein Relativdruckmeßgerät. Mit einem Relativdruckmeßgerät wird ein zu messender Druck p bezogen auf einen Referenzdruck p_{R} erfaßt. Der so gemessene Druck wird als Relativdruck bezeichnet. Als Referenzdruck dient z.B. ein Atmosphärendruck, der in einer Umgebung eines Meßorts herrscht.

Relativdruckmeßgeräte werden in nahezu allen Industriezweigen zum Messen von Relativdrücken eingesetzt. Die gemessen Relativdruckwerte werden z.B. zum Steuern, Regeln und/oder Überwachen eines industriellen Herstellungs- und/oder Verarbeitungsprozesses eingesetzt.

Relativdruckmeßgeräte weisen eine in einem Gehäuse eingebaute Relativdruckmeßzelle auf. Die Relativdruckmeßzelle weist z.B. einen Grundkörper und ein darauf angeordnetes druckempfindliches Element ; z.B. eine Membran, auf. Auf eine grundkörper-abgewandte Seite des druckempfindlichen Elements wirkt der zu messende Druck p entweder direkt oder übertragen durch einen Druckmittler ein. Auf eine grundkörper-zugewandte Seite des druckempfindlichen Elements wirkt der Referenzdruck p_{R} ein. Der Referenzdruck p_{R} wird dem druckempfindlichen Element über eine Referenzdruckzufuhr, in der Regel eine den Grundkörper durchdringende im Gehäuse mündende Bohrung, zugeführt.

Die Relativdruckmeßzelle ist üblicher Weise auf einem Träger angeordnet, durch den das Gehäuse in eine prozeß-zugewandte Hälfte und eine prozeß-abgewandte Hälfte unterteilt ist. Durch die prozeß-zugewandte Hälfte hindurch wird im Betrieb der zu messende Druck p zugeführt. In der prozeß-abgewandten Hälfte ist eine elektronische Schaltung zur Aufnahme, Auswertung und/oder Verarbeitung von von der Relativdruckmeßzelle generierten elektrischen Signalen angeordnet.

Der Träger bildet vorzugsweise eine druckfeste Trennung, die dazu dient, ein Austreten eines Mediums, dessen Druck gemessen werden soll zu verhindern.

Bei einer Relativdruckmeßzelle kann jedoch der Fall eintreten, daß das druckempfindliche Element zerstört wird. Dann besteht bei Relativdruckmeßgeräten bei denen die Referenzdruckzufuhr in der prozeß-abgewandten Gehäusehälfte mündet durch die Referenzdruckzufuhr eine Verbindung zwischen den beiden Gehäusehälften. Im schlimmsten Fall wird durch das Medium eine in der zweiten Gehäusehälfte befindliche Elektronik zerstört, bevor sie eine Fehlermeldung abgeben kann.

In der DE-690 15 367 T2 ist ein Referenzdruckmeßgerät beschrieben, das einen zylindrischen Träger aufweist, der in ein zylindrisches Gehäuse eingefaßt ist. Der Träger ist auf einen Prozeßanschluß aufgeschweißt, der in das Gehäuse eingeschraubt ist. Es ist eine Referenzdruckzufuhr vorgesehen, die seitlich aus dem Träger herausgeführt ist, und an einer gehäuse-zugewandten Seitenwand des Trägers mündet. Ein ringzylindrischer Hohlraum zwischen Gehäuse und Träger, in den die Referenzdruckzufuhr mündet ist einerseits durch das Gewinde des Prozeßanschlusses und andererseits durch eine zwischen dem Gehäuse und dem Träger in einer Nut des Trägers gehalterten Dichtung abgedichtet.

Tritt hier Medium durch die Referenzdruckzufuhr aus, so kann es nur schlecht durch das Gewinde nach außen abfließen. Entsprechend wird das Medium innigen Kontakt zu der Dichtung haben. Bei besonders aggressiven Medien, kann es sein, daß die Dichtung durch das Medium beschädigt wird und ihre Wirkung verliert. In diesem Fall kann wieder Medium in die prozeß-abgewandte Gehäusehälfte eindringen.

In der US-A 6,050,145 ist ein Relativdruckmeßgerät beschrieben, das dem in der DE-690 15 367 T2 beschriebenen Relativdruckmeßgerät sehr ähnlich ist. Der Träger ist hier auf einen Druckmittler aufgeschweißt, der in das Gehäuse eingeschraubt ist. Es ist eine Referenzdruckzufuhr vorgesehen, die im Träger ein Stück in prozeß-abgewandter Richtung verläuft, dann seitlich fortgeführt ist und schließlich in prozeß-zugewandter Richtung an der Relativdruckmeßzelle vorbei aus dem Träger herausgeführt ist. Außerhalb des Trägers ist die Referenzdruckzufuhr in dem Druckmittler fortgesetzt und mündet unterhalb des Gehäuses in prozeß-zugewandter Richtung. Tritt hier eine Zerstörung einer Trennmembran des Druckmittlers und der Membran der Druckmeßzelle ein, so wird das Medium aus dem Gehäuse herausgeleitet.

Diese Art der Referenzdruckzufuhr ist jedoch sehr aufwendig, da sie eine Vielzahl von Bohrungen durch den in erfodert, um das Leitungssystem aufzubauen.

In dem US Patent Nr. 6,051,853 ist beispielsweise ein Halbleiterdrucksensor mit einer Referenzkapazität auf dem Sensorsubstrat offenbart. Der Referenzdruck wird auch bei diesem Sensor in axialer Richtung zur prozessabgewandten Rückseite des Sensorelements geführt.

Es ist die Aufgabe der Erfindung, ein Relativdruckmeßgerät mit einer Referenzdruckzufuhr anzugeben, die ein hohes Maß an Sicherheit bietet und einfach herstellbar ist.

Die Aufgabe wird gelöst durch das Relativdruckmessgerät gemäß des unabhängigen Patentanspruchs 1.

Hierzu besteht die Erfindung in einem Relativdruckmessgerät mit
- einer Relativdruckmeßzelle,
   -- mit einem druckempfindlichen Element,
      --- an dessen prozeß-zugewandten Seite im Betrieb ein zu messender Druck p anliegt,
      --- an dessen prozeß-abgewandten Seite im Betrieb ein Referenzdruck p_{R} anliegt, auf den der zu messende Druck p zu beziehen ist,
- einem Träger,
   -- auf dem die Relativdruckmeßzelle angeordnet ist und
   -- der in ein Gehäuse eingefaßt ist,
- einem Prozeßanschluß,
   -- der an einem prozeß-zugewandten Ende des Gehäuses angeschlossen ist,
- einem Meßgerätgehäuse,
   -- das an einem prozeß-abgewandten Ende des Gehäuses angeordnet ist, und
- einer Referenzdruckzufuhr, durch die hindurch im Betrieb der Referenzdruck pₙ zu der prozeß-abgewandten Seite des druckempfindlichen Elements geführt ist,
   -- die seitlich durch den Träger und eine einzige Bohrung durch das Gehäuse hindurch vollständig aus dem Relativdruckmeßgerät heraus führt, wobeider Träger aus Glas besteht, ein elektromechanischer Wandler vorgesehen ist,der dazu dient eine druckabhängige Veränderung des druckempfindlichen Elements zu erfassen und in eine druckabhängige elektrische Größe umzuwandeln, die über Anschlußleitungen abnehmbar ist, mit den Anschlußleitungen prozeßabgewandte Hälfte des Gehäuses durchgeführt sind.

Gemäß einer Weiterbildung ist ein Adapter vorgesehen, der mit dem Gehäuse verbunden ist, und auf den das Meßgerätgehäuse montiert ist.

Gemäß einer Weiterbildung besteht der Träger aus einem Isolator und das druckempfindliche Element ist unmittelbar auf den Träger aufgebracht.

Gemäß einer Ausgestaltung ist in die Bohrung im Gehäuse ein Filter eingebracht, der dazu dient ein Eindringen von Flüssigkeit und/oder Feuchtigkeit zu verhindern.

Gemäß einer Ausgestaltung ist die Bohrung im Gehäuse mit einer Abdeckung versehen, die als Spritzwasserschutz dient.

Gemäß einer Ausgestaltung weist mindestens ein Leitungsabschnitt der Referenzdruckzufuhr einen geringen Durchmesser auf und dient als Flammendurchschlagsperre.

Die Erfindung und weitere Vorteile werden nun anhand der Figuren der Zeichnung, in denen zwei Ausführungsbeispiele dargestellt sind, näher erläutert; gleiche Elemente sind in den Figuren mit gleichen Bezugszeichen versehen.
- Fig. 1: zeigt einen Schnitt durch einen erfindungsgemäßen Relativdrucksensor mit einer außerhalb des Gehäuses mündenden Referenzdruckzufuhr; und
- Fig. 2: zeigt einen Schnitt durch einen erfindungsgemäßen Relativdrucksensor mit einer außerhalb des Gehäuses mündenden Referenzdruckzufuhr und einem Gehäuseadapter.

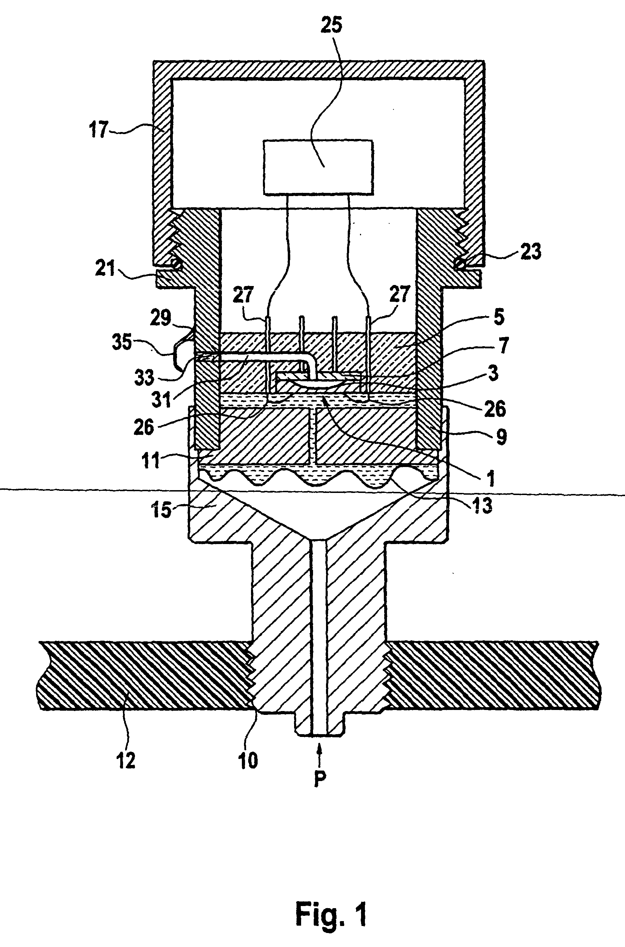

Fig. 1 zeigt einen Schnitt durch ein erfindungsgemäßes Relativdruckmeßgerät. Das Relativdruckmeßgerät weist eine Relativdruckmeßzelle 1 auf, die ein druckempfindliches Element 3 aufweist. Die Relativdruckmeßzelle 1 ist auf einem Träger 5 angeordnet.

Als Relativdruckmeßzelle 1 eignet sich z.B. ein Halbleiter-Sensor, z.B. ein Silizium-Chip mit eindotierten Widerstandselementen. Der Silizium-Chip ist hier als Membran ausgebildet und bildet das druckempfindliche Element 3. Er ist, wie in Fig. 1 dargestellt, auf einen Grundkörper 7 aufgebracht. Der Grundkörper 7 ist z.B. ein Substrat aus Glas oder ebenfalls aus Silizium.

An einer prozeß-zugewandten Seite des druckempfindlichen Elements 3 liegt im Betrieb ein zu messender Druck p an. An einer prozeß-abgewandten Seite liegt im Betrieb ein Referenzdruck p_{R} an, auf den der zu messende Druck p zu beziehen ist. Eine druckabhängige Veränderung des druckempfindlichen Elements 3, hier eine Auslenkung der Membran, ist somit von einem auf sie einwirkenden Relativdruck p-p_{R} bestimmt.

Der Träger 5, auf dem die Relativdruckmeßzelle 1 angeordnet ist, ist in ein Gehäuse 9 eingefaßt. Der Träger 5 ist in dem dargestellten Ausführungsbeispiel scheibenförmig und das Gehäuse 9 ist zylindrisch. Der Träger 5 besteht vorzugsweise aus Glas. Es sind aber auch Träger aus Metall einsetzbar. Das Gehäuse 9 besteht vorzugsweise aus einem Metall, z.B. aus einem Stahl oder Edelstahl.

Der Träger 5 wird in ein Gehäuse 9 derart eingebaut, daß das Gehäuse 9 in eine erste prozeß-zugewandte und eine zweite prozeß-abgewandte Hälfte unterteilt ist. Der Träger 5 bildet vorzugsweise eine druckfeste Trennung zwischen den beiden Hälften.

An die prozeß-zugewandte erste Hälfte, in der sich das druckempfindliche Element 3 befindet, ist ein Druckmittler 11 angeschlossen, über den ein zu messender Druck p auf die Membran 3 übertragen wird. Der Druckmittler 11 weist eine Trennmembran 13 auf, an der im Betrieb der zu messende Druck p anliegt. Er ist mit einer möglichst inkompressiblen Flüssigkeit, z.B. einem Silikonöl, gefüllt, die einen auf eine äußere Trennmembran 13 einwirkenden zu messenden Druck p durch eine dünne Leitung hindurch auf das druckempfindliche Element 3 überträgt. Die Leitung weist vorzugsweise einen so geringen Durchmesser auf, daß die Leitung als Flammendurchschlagsperre wirkt.

Vor dem Druckmittler 11 ist ein Prozeßanschluß 15 vorgesehen, der an einem prozeß-zugewandten Ende des Gehäuses 9 angeschlossen ist. In dem dargestellten Ausführungsbeispiel ist der Prozeßanschluß 15 ein im wesentlichen zylindrisches Bauteil, das auf das Gehäuse 9 aufgeschraubt ist und an dessen gehäuse-abgwandten Ende ein Außengewinde 10 angeformt ist, das dazu dient, den Drucksensor an einem Meßort, z.B. einer Öffnung in einer Behälterwand 12, zu befestigten.

Alternativ kann der Prozeßanschluß 15 zusammen mit der Trennmembran 13 und einem gegebenenfalls vorzusehenenden Membranbett in einem Arbeitsgang mit dem Gehäuse 9 durch Schweißung verbunden sein. Wird auf ein Membranbett verzichtet, so kann die Trennmembran 13 auch unmittelbar auf das Gehäuse 9 aufgeschweißt sein.

Der Prozeßanschluß 15 weist eine durchgehende zentrale axiale Bohrung auf, durch die im Betrieb ein Medium, dessen Druck gemessen werden soll zu der Trennmembran 13 des Druckmittlers 11 gelangt.

An einem dem Prozeßanschluß 15 gegenüberliegenden prozeß abgewandten Ende des Gehäuse 9 ist ein Meßgerätgehäuse 17 angeordnet. Da das Gehäuse 9 durch den Träger 5 in zwei völlig getrennte Hälften unterteilt ist, kann das Meßgerätgehäuse 17 unmittelbar auf das Gehäuse 9 montiert werden. Das Gehäuse 9 weist endseitig ein Außengewinde 19 auf, auf das das Meßgerätgehäuse 17 aufgeschraubt ist, bis es an einem sich radial nach außen erstreckenden an das Gehäuse 9 angeformten Absatz 21 aufliegt. Zwischen dem Gehäuse 9 und dem Meßgerätgehäuse 17 ist eine Dichtung 23 vorgesehen, die auf dem Absatz 21 aufliegt.

In dem Meßgerätgehäuse 17 ist eine elektronische Schaltung 25 vorgehen. Diese dient z.B. zur Aufnahme und/oder Verarbeitung von von der Relativdruckmeßzelle 1 im Betrieb generierten elektrischen Meßgrößen.

Die Relativdruckmeßzelle 1 weist einen elektromechanischen Wandler auf, der dazu dient eine druckabhängige Veränderung des druckempfindlichen Elements 3, hier eine Auslenkung der Membran, zu erfassen und in eine druckabhängige elektrische Meßgröße umzuwandeln. Besteht das druckempfindliche Element 3 aus einer Membran aus einem Halbleiter, z.B. aus Silizium, so weist der elektromechanische Wandler vorzugsweise in die Membran eindotierte Widerstandselemente auf, deren elektrische Eigenschaften von auf sie einwirkenden mechanischen Einflüssen abhängen. Dabei können entweder einzelne Widerstände eingesetzt werden oder es können mehrere Widerstände z.B. zu einer Brückenschaltung zusammen gefaßt werden, bei der z.B. eine druckabhängige Brückenspannung auswertbar ist. Die elektrische Größe ist über Anschlußleitungen 26, z.B. Bonddrähte, abnehmbar. Die Anschlußleitungen 26 sind an durch den Träger 5 hindurch geführte Kontaktstifte 27 angeschlossen.

Bei einem metallischen Träger müssen hierzu z.B. vorgesehenen Träger 5 aus Glas sind die Kontaktstifte 27 unmittelbar in den Träger 5 eingeglast und zu der prozeß-abgewandten Hälfte des Gehäuses 9 durchgeführt und dort an die elektronische Schaltung 25 angeschlossen.

Es ist eine Referenzdruckzufuhr vorgesehen, durch die hindurch im Betrieb der Referenzdruck p_{R} zu der prozeß-abgewandten Seite des druckempfindlichen Elements 3 geführt ist. Die Referenzdruckzufuhr führt von einer den Grundkörper 7 durchdringenden Bohrung ein Stück in prozeß-abgewandter Richtung in den Träger 5 hinein und dann seitlich durch den Träger 5 und eine einzige Bohrung 29 durch das Gehäuse 9 hindurch vollständig aus dem Relativdruckmeßgerät heraus.

Die den Grundkörper 7 durchdringende Bohrung weist ein erstes Ende auf, das in einer durch das druckempfindliche Element 3 und den Grundkörper 7 gebildeten Kammer mündet. Ein zweites Ende der Bohrung mündet am Träger 5.

Im Träger 5 verläuft eine Verbindung 31, durch die die Bohrung im Grundkörper 7 durch den Träger 5 hindurch nach außen fortgeführt ist. Bei einem Träger aus Metall ist die Verbindung 31 durch zwei gerade Bohrungen zu realisieren. Bei einem Träger 5 aus Glas kann die Verbindung 31 dagegen ein eingeglastes Röhrchen sein, oder es kann eine Ausnehmung im Glas vorgesehen sein. Eine solche Ausnehmung wird z.B. durch ein entsprechend geformtes Füllmaterial hergestellt, das nach einem Aushärten des Glases aus dem Träger 5 entfernt wird.

Anders als beim Stand der Technik ist die Verbindung 31 sehr einfach aufgebaut. Sie weist maximal zwei kleine gerade Bohrungen vorzugsweise aber nur eine Ausnehmung oder ein eingeglastes Röhrchen auf. Hierdurch ist die Relativdruckzufuhr sehr einfach und kostengünstig herstellbar.

Vorzugsweise ist in die Bohrung 29 im Gehäuse 9 ein Filter 33, z.B. aus Metall, Polytetraflourethylen (PTFE) oder einem hydrophilen Werkstoff eingebracht. Der Filter 33 dient dazu ein Eindringen von Flüssigkeit und/oder Feuchtigkeit zu verhindern.

Zusätzlich ist die Bohrung 29 im Gehäuse 9 mit einer an einer Außenwand des Gehäuses 9 befestigten, die Bohrung 29 überdeckenden Abdeckung 35 versehen, die als Spritzwasserschutz dient.

Die Referenzdruckzufuhr führt direkt aus dem Gehäuse 9 heraus. Selbst wenn nun die Trennmembran 13 und das druckempfindliche Element 3 durch einen Unfall zerstört werden dringt kein Medium in das Meßgerätgehäuse 17 ein. Die elektronische Schaltung 25 ist auch dann noch geschützt und kann eine Fehlermeldung oder einen Alarm abgeben. Hierdurch wird der Unfall schnell entdeckt und der Fehler kann behoben werden, bevor große Mengen an Medium austreten.

Vorzugsweise weist mindestens ein Leitungsabschnitt der Referenzdruckzufuhr, z.B. die Bohrung durch den Grundkörper 7 oder die Verbindung 31, einen geringen Durchmesser auf und dient hierdurch als Flammendurchschlagsperre.

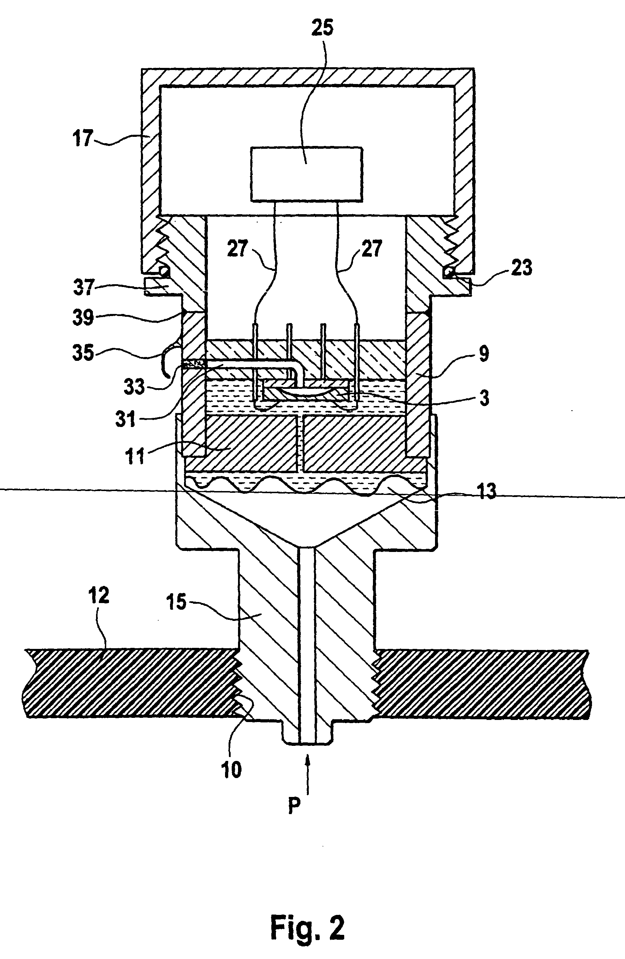

Fig. 2 zeigt ein weiteres Ausführungsbeispiel eines erfindungsgemäßen Relativdruckmeßgeräts. Aufgrund der großen Übereinstimmung zu dem vorgehenden Ausführungsbeispiel werden nachfolgend lediglich die bestehenden Unterschiede näher erläutert.

Bei dem in Fig. 2 dargestellten Ausführungsbeispiel ist das Gehäuse 9 zylindrisch. Mit dem Gehäuse 9 ist ein Adapter 37, z.B. durch eine Schweißung 39, fest verbunden. Auf den

Ausführungsbeispiel das Meßgerätgehäuse montiert . Diese zweiteilige Ausbildung mit Gehäuse 9 und Adapter 37 bietet den Vorteil, daß verschiedene Adapter eingesetzt werden können und somit verschiedene Meßgerätgehäusetypen montiert werden können, ohne daß Änderungen an der die Relativdruckmeßzelle enthaltenden Einheit erforderlich sind.

Bei dem in Fig. 2 dargestellten Ausführungsbeispiel besteht der Träger 5 aus einem Isolator, z.B. aus Glas und das druckempfindliche Element 3 ist unmittelbar auf den Träger 5 aufgebracht. Der Grundkörper 7 kann immer dann entfallen, wenn der Träger 5 aus einem Isolator besteht. Diese Bauweise kann selbstverständlich auch in Verbindung mit dem in Fig. 1 dargestellten Ausführungsbeispiel verwendet werden. Umgekehrt kann natürlich auch bei dem in Fig. 2 dargestellten Ausführungsbeispiel ein Grundkörper eingesetzt werden.

## Patentansprüche

1. Relativdruckmessgerät mit
- einer Relativdruckmesszelle (1),
-- mit einem druckempfindlichen Element (3),
--- an dessen prozesszugewandten Seite im Betrieb ein zu messender Druck (p) anliegt,
--- an dessen prozessabgewandten Seite im Betrieb ein Referenzdruck (p_{R}) anliegt, auf den der zu messende Druck (p) zu beziehen ist,
- einem Träger (5),
-- auf dem die Relativdruckmesszelle (1) angeordnet ist, und
-- der in ein Gehäuse (9) eingefasst ist,
- einem Prozessanschluss (15),
-- der an einem prozesszugewandten Ende des Gehäuses (9) angeschlossen ist,
- einem Messgerätgehäuse (17),
-- das an einem prozessabgewandten Ende des Gehäuses (9) angeordnet ist, und
- einer Referenzdruckzufuhr, durch die hindurch im Betrieb der Referenzdruck (p_{R}) zu der prozessabgewandten Seite des druckempfindlichen Elements (3) geführt ist, die durch den Träger (5) und eine einzige Bohrung (29) durch das Gehäuse (9) hindurch vollständig aus dem Relativdruckmessgerät heraus führt,
**dadurch gekennzeichnet dass**
- die Referenzdruckzufuhr seitlich durch den Träger aus dem Relativdruckgerät heraus führt,
- der Träger (5) aus Glas besteht,
- ein elektromechanischer Wandler vorgesehen ist, der dazu dient eine druckabhängige Veränderung des druckabhängigen Elements (3) zu erfassen und in eine druckabhängige elektrische Größe umzuwandeln, die über Anschlussleitungen (26)) abnehmbar ist, und
- mit den Anschlussleitungen (26) verbundene Kontaktstifte (27) eingeglast und in eine prozessabgewandte Hälfte des Gehäuses (9) durchgeführt sind.

2. Relativdruckmessgerät nach Anspruch 1, bei dem
- ein Adapter (37) vorgesehen ist,
-- der mit dem Gehäuse (9) verbunden ist, und
-- auf den das Messgerätgehäuse (17) montiert ist.

3. Relativdruckmessgerät nach Anspruch 1, bei dem
- das druckempfindliche Element (3) unmittelbar auf den Träger (5) aufgebracht ist.

4. Relativdruckmessgerät nach Anspruch 1, bei dem in die Bohrung (29) im Gehäuse (9) ein Filter (33) eingebracht ist, der dazu dient ein Eindringen von Flüssigkeit und/oder Feuchtigkeit zu verhindern.

5. **Relativdruckmessgerät nach Anspruch 1, bei dem die Bohrung (29) im** Gehäuse (9) mit einer Abdeckung (35) versehen ist, die als Spritzwasserschutz dient.

6. Relativdruckmessgerät nach Anspruch 1, bei dem mindestens ein Leitungsabschnitt der Referenzdruckzufuhr einen derart geringen Durchmesser aufweist, dass er die Erfordernisse an eine Flammendurchschlagsperre erfüllt.

## Claims

1. Relative pressure measuring device with
- a relative pressure measuring cell (1)
-- with a pressure-sensitive element (3)
--- where a pressure (p) to be measured is applied to the process side during operation
--- where a reference pressure (p_{R}) is applied to the non-process side during operation.
The pressure (p) to be measured is to refer to this reference pressure
- a support element (5)
-- on which the relative pressure measuring cell (1) is arranged and
-- which is incorporated in a housing (9)
- a process connection (15)
-- which is connected to an end of the housing (9) facing towards the process
- a measuring device housing (17)
-- which is arranged on an end of the housing (9) facing away from the process
- a reference pressure supply path through which, during operation, the reference pressure (p_{R})
is directed to the non-process side of the pressure-sensitive element (3).
This reference pressure supply path runs through the support element (5) and a single bore
(29) through the housing (9) and completely out of the relative pressure measuring device.
Distinguishing features of the relative pressure measuring device include:
- The reference pressure supply path runs laterally through the support element and out of the relative pressure device
- The support element (5) is made of glass
- An electromechanical converter is provided which is used to record a pressure-dependent change in the pressure-sensitive element (3) and convert this to a pressure-dependent electrical variable which can be read off via connecting cables (26)
- The contact pins (27) which are cast in glass and connected to the connecting cables (26) and integrated into a non-process half of the housing (9).

2. Relative pressure measuring device as per claim 1 where
- an adapter (37) is provided which
- is connected to the housing (9) and
- on which the measuring device housing (17) is mounted

3. Relative pressure measuring device as per claim 1 where the pressure-sensitive element (3) is mounted directly on the support element (5).

4. Relative pressure measuring device as per claim 1 where a filter (33) is integrated in the bore (29) in the housing (9). This filter is used to prevent the penetration of liquid and/or moisture.

5. Relative pressure measuring device as per claim 1 where the bore (29) in the housing (9) is provided with a cover (35) which protects against splash water.

6. Relative pressure measuring device as per claim 1 where at least one section of the reference pressure supply path has such a small diameter that it meets the requirements with regard to a flame arrester.

## Revendications

1. Manomètre de pression relative muni
- d'une cellule de mesure de pression (1),
- - dotée d'un élément sensible à la pression (3),
- - - dont le côté orienté vers le processus se voit appliquer en fonctionnement une pression à mesurer (p),
- - - dont le côté opposé au processus se voit appliquer en fonctionnement une pression de référence (p_{R}), à laquelle se réfère la pression à mesurer (p),
- d'un support (5),
- - sur lequel est disposée la cellule de mesure de pression relative (1) et
- - qui est enveloppé dans un boîtier (9),
- d'un raccord process (15),
- - qui est raccordé à une extrémité du boîtier (9) faisant face au processus, - d'un boîtier de manomètre (17),
- - qui est disposé à une extrémité du boîtier (9) opposée au processus, et - d'une alimentation de pression de référence, à travers laquelle la pression de référence (p_{R}) est acheminée à l'élément sensible à la pression (3), côté opposé au processus, qui est sortie entièrement du manomètre de pression relative à travers le support (5) et un unique alésage (29) à travers le boîtier (9),
**caractérisé en ce que**
- l'alimentation de pression de référence est sortie latéralement du manomètre de pression relative à travers le support,
- le support (5) est constitué de verre,
- un convertisseur électromécanique est prévu, lequel sert à détecter un changement en fonction de la pression de l'élément sensible à la pression (3) et à le convertir en une grandeur électrique dépendant de la pression, qui peut être prélevée par le biais de fils de raccordement (26) et
- les contacts mâles (27) reliés à ces fils de raccordement (26) étant vitrifiés et guidés dans la moitié de boîtier (9) opposée au processus.

2. Manomètre de pression relative selon la revendication 1, pour lequel
- un adaptateur (37) est prévu,
-- qui est relié avec le boîtier (9) et
-- qui est monté sur le boîtier de manomètre (17).

3. Manomètre de pression relative selon la revendication 1, pour lequel
- l'élément sensible à la pression (3) est disposé directement sur le support (5).

4. Manomètre de pression relative selon la revendication 1, pour lequel un filtre (33) est monté dans l'alésage (29) du boîtier (9), lequel filtre sert à empêcher une infiltration de liquide et/ou d'humidité.

5. Manomètre de pression relative selon la revendication 1, pour lequel l'alésage (29) du boîtier (9) est muni d'un cache (35), qui sert de protection contre les projections.

6. Manomètre de pression relative selon la revendication 1, pour lequel au minimum une section de conduite de l'alimentation de pression de référence présente un faible diamètre tel qu'il remplisse les exigences en termes de blocage de retour de flamme.
